# EUROPEAN PATENT SPECIFICATION

(11) **EP 1 998 334 B1**
(45) Date of publication and mention of the grant of the patent: **02.04.2014**
(21) Application number: 08251881.2
(22) Date of filing: 30.05.2008
(51) Int. Cl.: G11B 27/034

(54) **Photographing apparatus and method for controlling the same**
Fotografiergerät und Steuerverfahren dafür
Appareil de photographie et procédé de commande correspondant

(30) Priority: 01.06.2007 JP 2007147054
(43) Date of publication of application: 03.12.2008
(73) Proprietor: Fujifilm Corporation, Minato-ku Tokyo (JP)
(72) Inventor: Misawa, Takeshi, Kurokawa-gun Miyagi (JP); Misawa, Atsushi, Kurokawa-gun Miyagi (JP)
(74) Representative: Stevens, Jason Paul

(56) References cited:
- EP-A- 0 330 332
- EP-A- 1 764 800
- JP-A- 10 229 543
- JP-A- 2002 044 609
- JP-A- 2002 142 145
- JP-A- 2005 117 456
- US-A1- 2004 120 689
- US-B1- 6 577 805

## Description

### BACKGROUND OF THE INVENTION

### Field of the Invention

The present invention relates to a photographing apparatus that records on a recording medium a moving image obtained by photographing a subject, and a method for controlling the photographing apparatus.

### Description of the Related Art

Among photographing apparatuses such as digital cameras and digital video cameras that can record still images and moving images of photographed subjects on a recording medium, a photographing apparatus proposed, for example, in Japanese Unexamined Patent Publication No. JP10229543 A, 25 August 1998 checks available space on the recording medium, and then calculates and indicates an available recording time of a moving image.

Further, in a photographing apparatus proposed in Japanese Unexamined Patent Publication No. JP2002142145 A, 17 May 2002, image quality of a moving image to be photographed is determined based on available space on the recording medium in order to photograph a moving image of a certain length. Furthermore, in a photographing apparatus proposed in Japanese Unexamined Patent Publication No. JP2002044609 A, 8 February 2002, a frame rate, at which images sequentially taken through a monitor camera are recorded on the recording medium, is adjusted based on available space on the recording medium in order to recorded a moving image of a certain length.

In addition, a mobile terminal proposed in Japanese Unexamined Patent Publication No. JP2005117456 A, 28 April 2005 is provided with an edit function to add a transition effect at the first frame or the last frame of a moving image selected or inputted by the user.

US Patent publication US-B1-6 577 805 to Hirai Jun [JP], published on 10 June 2003, shows a recording method in which title pictures are inserted between consequent scenes, possibly with transition effects. The title pictures are stored in advance in a special area of a recording medium, from where they are transferred to a place on the recording medium between the scenes.

In the above-described prior art photographing apparatuses, however, a moving image photographing operation is automatically stopped when the photographing time has reached a continuous photographing time, which has been set in advance so that the moving image photographing operation is carried out for a certain period of time, without a manual instruction by the user, such as pressing a stop button. When a moving image taken by a photographing operation that was automatically stopped as described above is played back, the moving image abruptly ends without any sign, that is, the manner of ending presents an impression of abruptness.

In order to provide a less abrupt end of a played back moving image, it is possible to transfer a moving image taken with a photographing apparatus to another device, such as a PC or the mobile terminal disclosed in Japanese Unexamined Patent Publication No. JP2005117456 A, 28 April 2005, and process the moving image in various manners, such as adding an image at the end of the moving image using a video editing software. However, to edit each photographed moving image in this manner, complicated manual operations are required.

### SUMMARY OF THE INVENTION

In view of the above-described circumstances, the present invention is directed to providing a photographing apparatus and a recording method for use with the photographing apparatus that provide a natural (less abrupt) end of a played back moving image even if the moving image was taken by a photographing operation that was stopped when a continuous photographing time set in advance had elapsed.

An aspect of the photographing apparatus of the invention is a photographing apparatus for recording on a recording medium a moving image obtained by photographing a subject, the photographing apparatus including: a photographing time setting unit to set a continuous photographing time for continuing a moving image photographing operation; a break image acquiring unit to acquire a break image for intermission and a break image for ending; a determining unit to determine whether or not a next moving image photographing operation is started within a predetermined time interval after the previous moving image photographing operation is stopped when the continuous photographing time set by the setting unit has elapsed; and a recording unit to record one of the break image for intermission and the break image for ending at the end of the moving image photographed by the stopped moving image photographing operation, wherein, if the determining unit has determined that the next photographing operation is started within the predetermined time interval, the break image for intermission is recorded at the end of the moving image, and if the determining unit has determined that the next photographing operation is not started within the predetermined time interval, the break image for ending is recorded at the end of the moving image.

An aspect of the controlling method of the invention is a controlling method for controlling recording of a moving image obtained by photographing a subj ect on a recording medium, the method comprising: setting a continuous photographing time for continuing a moving image photographing operation; determining whether or not a next moving image photographing operation is started within a predetermined time interval after the previous moving image photographing operation is stopped when the continuous photographing time has elapsed; and recording one of a break image for intermission and a break image for ending at the end of the moving image photographed by the stopped moving image photographing operation, wherein, if it is determined that the next photographing operation is started within the predetermined time interval, the break image for intermission is recorded at the end of the moving image, and if it is determined that the next photographing operation is not started within the predetermined time interval, the break image for ending is recorded at the end of the moving image.

The break image for intermission and the break image for ending may be still images or moving images.

The break image for intermission and the break image for ending may be digest images of the moving image photographed by the stopped moving image photographing operation.

The continuous photographing time may be set based on an input by an operator before starting the moving image photographing operation.

The "break image for intermission" generally refers to an image which indicates that there is an image of a scene continuing from the moving image with the break image recorded therewith, i.e., an image which can directly or indirectly tell the viewer that there is an image of a continuing scene, such as an image containing a message indicating that there is an image of a continuing scene or an image suggesting that there is an image of a continuing scene. The "break image for ending" generally refers to an image which indicates that there is no image of a scene continuing from the moving image with the break image recorded therewith, i.e., an image which can directly or indirectly tell the viewer that there is no image of a continuing scene, such as an image containing a message indicating that there is no image of a continuing scene or an image suggesting that there is no image of a continuing scene.

The operation of "recording the break image at the end of the moving image" may be achieved by recording the break image to replace the end portion of the moving image or by adding the break image at the end of the moving image.

### BRIEF DESCRIPTION OF THE DRAWINGS

FIG. 1 is a schematic block diagram illustrating the internal configuration of a digital camera according to one embodiment of the present invention,
FIG. 2A illustrates one example of a break image acquired by a break image acquiring unit,
FIG. 2B illustrates another example of the break image acquired by the break image acquiring unit,
FIG. 3 is a flow chart illustrating a process carried out during a moving image photographing operation,
FIG. 4 is a flow chart illustrating another process carried out during a moving image photographing operation,
FIG. 5A is a conceptual diagram illustrating the structure of a moving image recorded by the digital camera of FIG. 1,
FIG. 5B is a conceptual diagram illustrating the structure of a moving image recorded by the digital camera of FIG. 1,
FIG. 6A illustrates one example of a moving image recorded by the digital camera of FIG. 1, and
FIG. 6B illustrates one example of a moving image taken with a conventional photographing apparatus.

### DESCRIPTION OF THE PREFERRED EMBODIMENTS

Hereinafter, one embodiment of the present invention, where a photographing apparatus of the invention is applied to a digital camera, will be described with reference to the drawings. It should be noted that the photographing apparatus of the invention is applicable not only to digital cameras but also to other electronic devices with an electronic photographing function, such as cellular phones with a camera and PDAs with a camera.

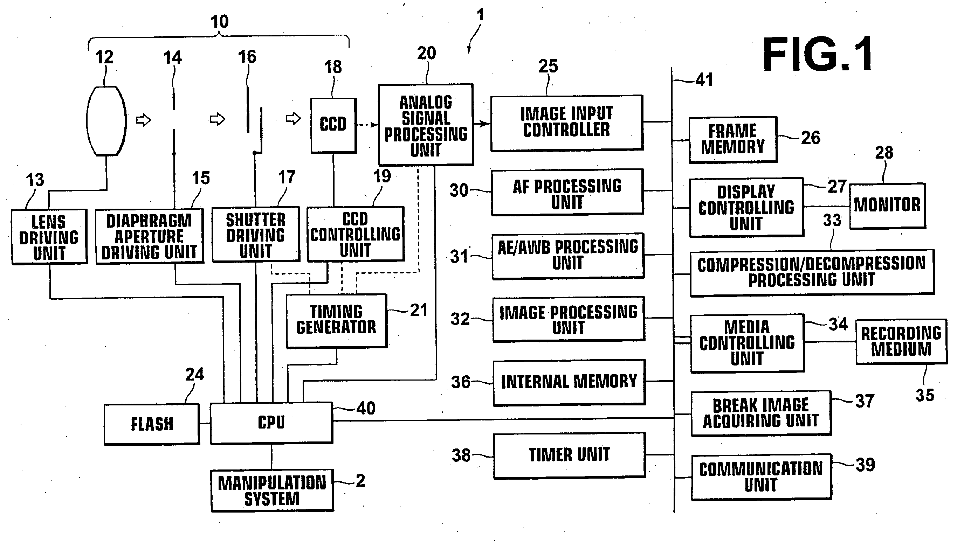

FIG. 1 is a schematic block diagram illustrating the internal configuration of a digital camera 1 according to one embodiment of the invention. The digital camera 1 includes a manipulation system 2, which includes elements such as a release button, a four-directional button and a menu button. The manipulation system 2 forms a photographing time setting unit.

An imaging system 10 include an imaging lens 12 formed by a focusing lens and a zooming lens. The focusing lens and the zooming lens forming the imaging lens 12 are movable along the optical axis by a lens driving unit 13.

A diaphragm aperture 14 is driven by a diaphragm aperture driving unit 15. The diaphragm aperture driving unit 15 adjusts an aperture diameter based on aperture value data outputted from an AE/AWB processing unit 31.

A shutter 16 is a mechanical shutter, and is driven by a shutter driving unit 17. The shutter driving unit 17 controls opening and closing of the shutter 16 according to a signal that is generated when a release button is pressed and shutter speed data that is outputted from the AE/AWB processing unit 31.

A CCD 18, which is an image pickup device, is disposed downstream the shutter 16. The CCD 18 includes a photoelectric surface formed by a large number of two-dimensionally arranged light receiving elements. A light image of the subject passing through the optical system, such as the imaging lens 12, is focused on the photoelectric surface and is subjected to photoelectric conversion. A micro lens array for converging the light at respective pixels and a color filter array formed by regularly arrayed R, G and B color filters are disposed upstream the photoelectric surface. The CCD 18 stores electric charges at the respective pixels and outputs them line by line as a serial analog imaging signal synchronously with a vertical transfer clock signal and a horizontal transfer clock signal supplied from a CCD controlling unit 19. A time for storing the charges at the pixels, i.e., an exposure time, is determined by an electronic shutter driving signal supplied from the CCD controlling unit 19. The CCD controlling unit 19 adjusts a gain of the CCD 18 to provide an analog imaging signal having a predetermined maximum value.

The analog imaging signal taken via the CCD 18 is inputted to an analog signal processing unit 20. The analog signal processing unit 20 includes a correlation double sampling circuit (CDS) for removing noise from the analog signal, an automatic gain controller (AGC) for controlling a gain of the analog signal, and anA/D converter (ADC) for converting the analog signal into a digital signal. It should be noted that processing carried out by the analog signal processing unit 20 is referred to herein as analog signal processing. The image data converted into the digital signal is CCD raw data, which includes R, G and B density values of the respective pixels.

A timing generator 21 generates a timing signal. The timing signal is supplied to the shutter driving unit 17, the CCD controlling unit 19 and the analog signal processing unit 20 to synchronize the manipulation of the release button with opening/closing of the shutter 16, transfer of the electric charges of the CCD 18, and processing by the analog signal processing unit 20.

The digital camera 1 further includes a flash 24 that emits light as necessary during a photographing operation.

An image input controller 25 writes the CCD raw data, which is inputted from the analog signal processing unit 20, in a frame memory 26.

The frame memory 26 provides a workspace for various image processing (signal processing) applied to the image data, which will be described later. The frame memory 26 is formed, for example, by a SDRAM (Synchronous Dynamic Random Access Memory) that transfers data synchronously with a bus clock signal having a constant frequency.

A display controlling unit 27 causes the image data stored in the frame memory 26 to be displayed on a monitor 28 as a live view, or causes a still image or a moving image stored in the recording medium 35 to be displayed on the monitor 28 in the playback mode.

An AF processing unit 30 and the AE/AWB processing unit 31 determine photographing conditions based on preliminary images. The preliminary images are images represented by image data which is stored in the frame memory 26 when a CPU 40, upon detecting a half-press signal generated when the release button is half pressed, causes the CCD 18 to carry out preliminary photographing.

The AF processing unit 30 detects a focal position based on the preliminary images and outputs focus driving amount data (AF processing). The focal position may be detected, for example, in a passive method, which utilizes the fact that a focused image of a desired subject has higher contrast than unfocused images of the subject.

The AE/AWB processing unit 31 measures a brightness of the subject based on the preliminary images, and then determines an ISO sensitivity, an aperture value, a shutter speed, and the like, for obtaining a desired brightness of the photographed image based on the measured brightness of the subject. The AE/AWB processing unit 31 uses the determined ISO sensitivity data, the aperture value data and the shutter speed data as exposure setting values (AE processing), and automatically adjusts a white balance for photographing (AWB processing).

An image processing unit 32 applies, to image data of an actually photographed image, image quality correction processing, such as tone correction, sharpness correction and color correction, and YC processing to convert the CCD raw data into YC data, which is formed by Y data representing a luminance signal, Cb data representing a blue color-difference signal and Cr data representing a red color-difference signal. The actually photographed image is an image represented by image data which is taken via the CCD 18 in actual photographing, which is carried out when the release button is fully pressed, and is stored in the frame memory 26 via the analog signal processing unit 20 and the image input controller 25. The image processing unit 32 also applies necessary processing to image data of a moving image.

A compression/decompression processing unit 33 applies compression processing according to a certain compression format, such as JPEG, to the image data of the actually photographed image that has been subjected to the processing by the image processing unit 32, to generate an image file. A tag storing accompanying information, such as photographing time and date, is added to the image file, based, for example, on the Exif format. It should be noted that, during a photographing operation in a moving image photographing mode, the compression/decompression processing unit 33 compresses the image data of the moving image according to a compression format such as Motion JPEG, MPEG 1, 2 or 4, or H.264 to generate an image file of the moving image.

A media controlling unit 34 accesses a recording medium 35 and controls writing and reading of the image file in out of the recording medium 35.

The recording medium 35 may be any of various media such as a SmartMedia, a PC card, a CompactFlash ®, a magnetic disc, an optical disc, a magneto-optical disc or a memory stick. A signal processing means and an interface for use with the recording medium 35 depend on a specific medium used. Further, two or more media, which may be of the same type or different types, may be loadable in the digital camera 10. Furthermore, the recording medium 35 is not limited to a removable medium and may be a recording medium built in the digital camera 10.

An internal memory 36 stores various constants set in the digital camera 1, programs executed by a CPU 40, and the like.

A break image acquiring unit 37 acquires a "break image for intermission" which indicates that there is an image of a scene continuing from the current moving image, and a "break image for ending" which indicates that there is no image of a scene continuing from the current moving image. The break image for intermission or the break image for ending acquired by the break image acquiring unit 37 is recorded at the end of a moving image taken by a photographing operation which is stopped when a continuous photographing time set in advance has been elapsed, depending on whether or not there is an image of a continuing scene from the moving image.

The "break image for intermission" may, for example, be an image containing a message, such as "intermission" or "to be continued", telling that there is an image of a continuing scene, or an image indicating that there is an image of a continuing scene, such as a countdown moving image counting down until the start of the movie, a moving image like a commercial message with popcorn and soft drinks shown at a theater, or an image of people seated and waiting for the movie to start.

The "break image for ending" may, for example, be an image containing a message, such as "FIN" or "END", telling that there is no image of a continuing scene, or an image indicating that there is no image of a continuing scene, such as a moving image like an end-title roll of a movie, an image of a person or an animation character asking "Did you enjoy the movie?", or an image of people leaving their seats and going away.

The "break image for intermission" and the "break image for ending" are not limited to the above examples, and may be any images that can directly or indirectly tell a viewer whether or not there is an image of a continuing scene.

To acquire these break images, images inputted in advance by the user and stored in the internal memory 36 as the break image for ending and the break image for intermission may be acquired, images inputted and stored in the internal memory 36 as the break images before shipment may be acquired, or new break images may be generated based on attributes of a photographed moving image, such as a dominant hue of the image, obtained through image analysis. Further, a portion of the moving image recorded in the recording medium, such as a still image, a moving image, a composite image of two or more still images or moving images, or a digest image, may be acquired and combined with a message indicating whether or not there is an image of a continuing scene, to be used as the break image.

The digest image may be generated, for example, by detecting a desired object, such as a face image, from each scene of the photographed moving image, evaluating impression of each detected image based on a position of the detected subject in the screen, a ratio of an area in the screen occupied by the detected subject or an amount of action of the detected subject, and combining a predetermined number of scenes having higher evaluation values arranged in order of time, or may be generated using any other known methods.

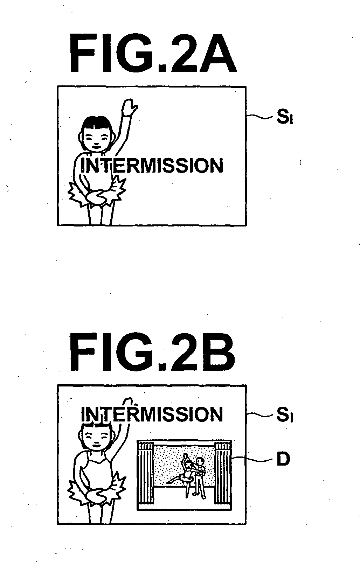

FIGs. 2A and 2B illustrate examples of the break image for intermission acquired by the break image acquiring unit 37. The example shown in FIG. 2A is an image containing a message indicating that there is an image of a continuing scene, which is recorded in advance in the internal memory 36 for use in the break image, and the example shown in FIG. 2B is an image further including a portion of the photographed image recorded in the recording medium, which is inserted in an area D on the break image.

A timer unit 38 times an elapsed time from the start of a moving image photographing operation and an elapsed time from the end of the moving image photographing operation, and outputs these values to the CPU 40.

A communication unit 39 communicates with an external recording device, such as a computer, to send or receive image data.

The CPU 40 controls respective units of the digital camera 1 according to signals fed from various processing units, such as the manipulation system 2 and the timer unit 38. Specifically, before or during a moving image photographing operation, the CPU 40 receives a setting of the continuous photographing time of the moving image photographing operation inputted by the user via the manipulation system 2 and stores the result of setting in the internal memory 36. It should be noted that the continuous photographing time may be set by the user or a default setting value thereof may be stored in the internal memory 36 before shipment.

When the digital camera 10 is operating in the moving image photographing mode, the CPU 40 stops the photographing operation when the photographing time of the moving image photographing operation inputted by the timer unit has reached the continuous photographing time, and then determines whether or not a next photographing operation is started within a predetermined time interval tk from the end of the previous photographing operation. If it is determined that the next photographing operation is started within the predetermined time interval tk, the CPU 40 controls the respective units of the digital camera 1, including the break image acquiring unit 37, to record the break image for intermission, which has been acquired in advance, at the end of the moving image photographed by the previous photographing operation. If it is determined that the next photographing operation is not started within the predetermined time interval tk, the CPU 40 controls the units of the digital camera 1 to record the break image for ending at the end of the photographed moving image.

To record the break image at the end of the moving image, the recorded break image may replace the end portion of the moving image or may be added at the end of the moving image. For example, if the set continuous photographing time is 59 minutes and 59 seconds, and the break image for intermission or ending to be added at the end of the moving image, which has been photographed by the photographing operation carried out for the continuous photographing time of 59 minutes and 59 seconds, is a moving image having a play back time of three seconds, then, the break image may replace image data of the last three seconds, i.e., from 59 min. 56 sec. to 59 min. 59 sec., of the moving image, or may be just added at the end of the moving image to form a moving image of one hour and two seconds long.

Further, the break image may be recorded at the end of the moving image with a transition effect, such as fade-in, to provide a smooth transition from the moving image to the break image.

A data bus 41 connects to various processing units, the frame memory 26 and the CPU 40 for transmission of image data, various instructions, and the like.

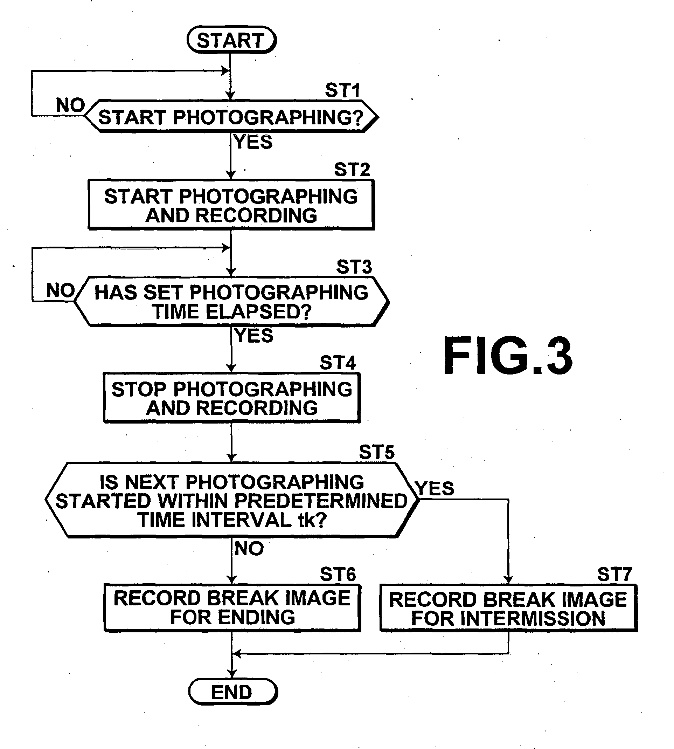

Next, one example of a process carried out by the digital camera 1 during a moving image photographing operation will be described with reference to the flow chart of FIG. 3.

The CPU 40 starts the process when the photographing mode is set to the moving image photographing mode, and monitors whether or not the user has pressed the release button to give instruction to start the photographing operation (step ST1). If an affirmative determination is made in step ST1, photographing and recording of a moving image is started (step ST2). Then, determination is made as to whether or not the photographing time has exceeded the set continuous photographing time (step ST3). If an affirmative determination is made in step ST3, the photographing and recording are stopped, and an image file M_{A} generated by recording the photographed moving image is left open, i.e., left in a state where additional recording can be made (step ST4). Then, determination is made as to whether or not a next photographing operation is started within the predetermined time interval tk from the end of the stopped photographing operation (step ST5) . If a negative determination is made in step ST5, the break image for ending is recorded at the end of the image file M_{A} and the file is closed (step ST6) . In contrast, if an affirmative determination is made in step ST5, the break image for intermission is recorded at the end of the image file M_{A} and the file is closed (step ST7).

The predetermined time interval tk may have any length, such as three seconds, as long as it allows discrimination between a continuing photographing operation and a non-continuing photographing operation such that, if a next photographing operation is started within the predetermined time interval tk after the previous photographing operation was stopped when the set continuous photographing time had elapsed, the next photographing operation is determined to be continuing from the previous photographing operation, and if a next photographing operation is started after the predetermined time interval tk, the next photographing operation is determined not to be continuing from the previous photographing operation. It should be noted that, if the set continuous photographing time is, for example, one hour, the predetermined time interval tk is preferably less than one hour.

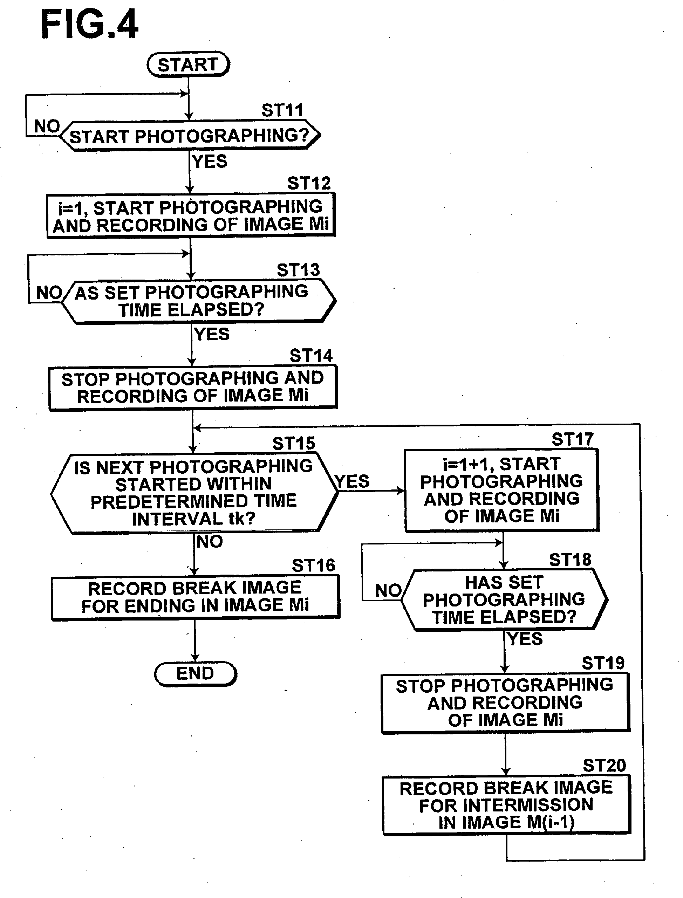

It should be noted that, in the above-described process, it is assume that the recording medium 35 is a HDD, for example, that can record more than one moving images simultaneously, and when a next photographing operation is started within the predetermined time interval tk after the previous moving image photographing operation was stopped when the set continuous photographing time had elapsed, additional recording of the break image in the image file MA of the previously photographed image is carried out simultaneously with recording of the next image being photographed. However, in a case where the recording medium 35 can record only one moving image at a time, it is preferred that the additional recording of the break image is carried out after the next photographing operation is finished, as shown in FIG. 4.

Now, another example of the process carried out by the digital camera 1 during a moving image photographing operation will be described with reference to the flow chart of FIG. 4.

The CPU 40 starts the process when the photographing mode is set to the moving image photographing mode, and monitors whether or not the user has pressed the release button to give instruction to start the photographing operation (step ST11) . If an affirmative determination is made in step ST11, a variable i is set to "1", and photographing of a moving image and recording in an image file Mᵢ are started (step ST12). Then, determination is made as to whether or not the photographing time has exceeded the set continuous photographing time (step ST13). If an affirmative determination is made in step ST13, the photographing and recording are stopped, and the image file Mᵢ generated by recording the photographed moving image is left open, i.e., left in a state where additional recording can be made (step ST14). Then, whether or not an instruction for starting a next photographing is given within the predetermined time interval tk from the end of the stopped moving image photographing operation is monitored (step ST15). If a negative determination is made in step ST15, the break image for ending is recorded at the end of the image file Mᵢ and the file is closed (step ST16). In contrast, if an affirmative determination is made in step ST15, the variable i is incremented by one, and photographing of a next moving image and recording in a next image file Mᵢ are started (step ST17). Then, determination is made as to whether or not the photographing time has exceeded the set continuous photographing time (step ST18) . If an affirmative determination is made in step ST18, the photographing and recording are stopped, and the image file Mᵢ generated by recording the photographed moving image is left open, i.e., left in a state where additional recording can be made (step ST19). Then, the break image for intermission is recorded at the end of the image file M₍ᵢ₋₁₎ and the file is closed (step ST20). Then, the process returns to step ST15 and repeats operations in step ST15 and the following steps.

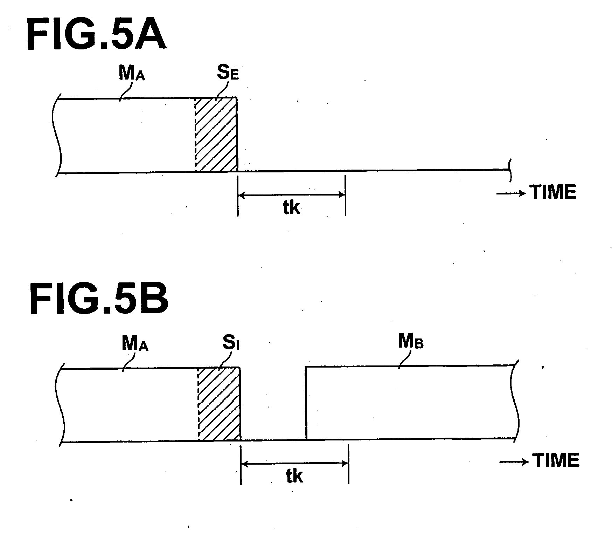

According to the above described processes, if a next photographing is not started within the predetermined time interval tk after a moving image photographing operation is stopped when a set continuous photographing time has elapsed, as shown in FIG. 5A, and thus there is no image of a continuing scene, the break image for ending S_{E} is recorded at the end of the image file M_{A} generated by recording the image photographed by the stopped photographing operation. In contrast, if a next photographing is started within the predetermined time interval tk, as shown in FIG. 5B, and thus there is an image of a continuing scene, the break image for intermission S_{I} is recorded at the end of the image file M_{A} generated by recording the image photographed by the stopped photographing operation.

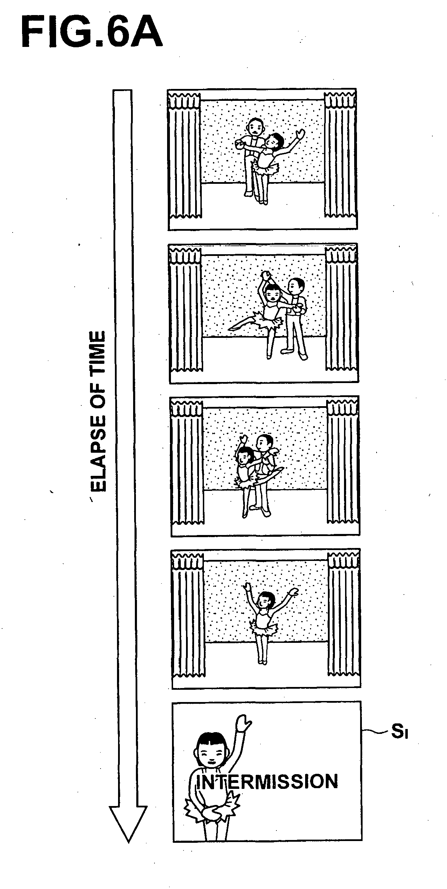

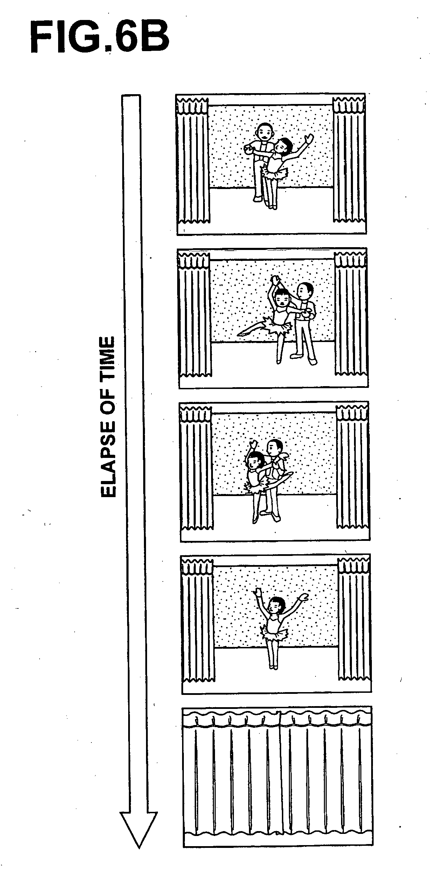

When a moving image taken by a photographing operation which was stopped when the set continuous photographing time had elapsed is played back, the break image for intermission S_{I} or the break image for ending S_{E} is shown when the played back moving image is about to end, as shown in FIG. 6A, to tell the viewer whether or not there is an image of a scene continuing from the played back moving image. In this manner, the impression of abrupt end can be mitigated when compared to a moving image taken with a conventional photographing apparatus, as shown in FIG. 6B, for example.

According to the photographing apparatus and the controlling method of the present invention, when a moving image photographing operation is stopped when the continuous photographing time has elapsed, determination is made as to whether or not a next photographing operation is started within a predetermined time interval after the previous photographing operation is stopped. If it is determined that the next photographing operation is started within the predetermined time interval, the break image for intermission is recorded at the end of the moving image photographed by the stopped photographing operation, and if it is determined that the next photographing operation is not started within the predetermined time interval, the break image for ending is recorded at the end of the moving image. Thus, when the photographed moving image being played back is about to end, the viewer can be informed of presence or absence of a further image of a continuing scene, thereby mitigating the impression of abrupt end.

Since complicated editing operations to provide a less abrupt end of the played back image are not necessary, the photographing apparatus and the controlling method provide improved convenience for the user.

## Claims

1. A photographing apparatus (1) for recording on a recording medium (35) a moving image obtained by photographing a subject, the photographing apparatus comprising:
a photographing time setting unit (2) to set a continuous photographing time duration for continuously carrying out a moving image photographing operation said apparatus stopping said moving image photographing operation when said continuous photographic time duration elapses from the start of said moving image photographic operation;
a break image acquiring unit (37) to acquire a first break image for intermission and a second break image for ending;
a determining unit (40) to determine whether or not a further moving image photographing operation is started within a predetermined time interval since the previous moving image photographing operation stops, when said continuous photographing time duration set by the setting unit (2) has elapsed; and
a recording unit (40) to record one of the first break image for intermission and the second break image for ending at the end of the moving image photographed by said previous stopped moving image photographing operation, wherein, if the determining unit (40) has determined that said further photographing operation is started within the predetermined H time interval, the first break image for intermission is recorded at the end of the moving image, and if the determining unit (40) has determined that said further photographing operation is not started within the predetermined time interval, the second break image for ending is recorded at the end of the moving image.

2. The photographing apparatus as claimed in claim 1, wherein the first break image for intermission and the second break image for ending comprise still images.

3. The photographing apparatus as claimed in claim 1, wherein the first break image for intermission and the second break image for ending comprise moving images.

4. The photographing apparatus as claimed in claim 1 or 3, wherein the first break image for intermission and the second break image for ending comprise digest images of the moving image photographed by said previous stopped moving image photographing operation.

5. The photographing apparatus as claimed in any one of claims 1 to 4, wherein the continuous photographing time duration is set based on an input by an operator before starting the moving image photographing operation.

6. A controlling method for controlling recording of a moving image obtained by photographing a subject on a recording medium (35), the method comprising:
setting a continuous photographing time duration for continuously carrying out a moving image photographing operation said moving image photographing operation being stopped when said continuous photographic time duration elapses from the start of said moving image photographic operation;
determining whether or not a further moving image photographing operation is started within a predetermined time interval since the previous moving image photographing operation stops, when said continuous photographing time duration has elapsed; and
recording one of a first break image for intermission and a second break image for ending at the end of the moving image photographed by said previous stopped moving image photographing operation, wherein, if it is determined that said further photographing operation is started within H the predetermined time interval, the first break image for intermission is recorded at the end of the moving image, and if it is determined that said further photographing operation is not started within the predetermined time interval, the second break image for ending is recorded at the end of the moving image.

7. The controlling method as claimed in claim 6, wherein the first break image for intermission and the second break image for ending comprise still images.

8. The controlling method as claimed in claim 6, wherein the first break image for intermission and the second break image for ending comprise moving images.

9. The controlling method as claimed in claim 6 or 8, wherein the first break image for intermission and the second break image for ending comprise digest images of the moving image photographed by said further stopped moving image photographing operation.

10. The controlling method as claimed in any one of claims 6 to 9, wherein the continuous photographing time duration is set based on an input by an operator before starting the moving image photographing operation.

## Patentansprüche

1. Fotografiervorrichtung (1) zum Aufzeichnen eines durch Fotografieren eines Subjekts erhaltenen Bewegtbilds auf einem Aufzeichnungsmedium (35), wobei die Fotografiervorrichtung folgendes aufweist:
eine Fotografierzeit-Einstelleinheit (2), um eine kontinuierliche Fotografierzeitdauer zum kontinuierlichen Ausführen einer Bewegtbild-Fotografieroperation einzustellen, wobei die Vorrichtung die Bewegtbild-Fotografieroperation stoppt, wenn die kontinuierliche Fotografierzeitdauer ab dem Beginn der Bewegtbild-Fotografieroperation verstreicht;
eine Pausenbild-Erlangungseinheit (37), um ein erstes Pausenbild zur Unterbrechung und ein zweites Pausenbild zum Beenden zu erlangen;
eine Bestimmungseinheit (40), um zu bestimmen, ob eine weitere Bewegtbild-Fotografieroperation innerhalb eines vorbestimmten Zeitintervalls begonnen ist oder nicht, seitdem die vorherige Bewegtbild-Fotografieroperation stoppt, wenn die durch die Einstelleinheit (2) eingestellte kontinuierliche Fotografierzeitdauer verstrichen ist; und
eine Aufzeichnungseinheit (40), um eines des ersten Pausenbilds zur Unterbrechung und des zweiten Pausenbilds zum Beenden am Ende des durch die vorangehend gestoppte Bewegtbild-Fotografieroperation fotografierten Bewegtbilds aufzuzeichnen, wobei dann, wenn die Bestimmungseinheit (40) bestimmt hat, dass die weitere Fotografieroperation innerhalb des vorbestimmten Zeitintervalls begonnen ist, das erste Pausenbild zur Unterbrechung am Ende des Bewegtbilds aufgezeichnet wird, und dann, wenn die Bestimmungseinheit (40) bestimmt hat, dass die weitere Fotografieroperation nicht innerhalb des vorbestimmten Zeitintervalls begonnen ist, das zweite Pausenbild zum Beenden am Ende des Bewegtbilds aufgezeichnet wird.

2. Fotografiervorrichtung nach Anspruch 1, wobei das erste Pausenbild zur Unterbrechung und das zweite Pausenbild zur Beendigung Standbilder aufweisen.

3. Fotografiervorrichtung nach Anspruch 1, wobei das erste Pausenbild zur Unterbrechung und das zweite Pausenbild zur Beendigung Bewegtbilder aufweisen.

4. Fotografiervorrichtung nach Anspruch 1 oder 3, wobei das erste Pausenbild zur Unterbrechung und das zweite Pausenbild zur Beendigung Auswahlbilder des durch die vorangehend gestoppte Bewegtbild-Fotografieroperation fotografierten Bewegtbilds aufweisen.

5. Fotografiervorrichtung nach einem der Anspruche 1 bis 4, wobei die kontinuierliche Fotografierzeitdauer basierend auf einer Eingabe durch einen Bediener vor einem Beginnen der Bewegtbild-Fotografieroperation eingestellt wird.

6. Steuerungsverfahren zum Steuern eines Aufzeichnens eines durch Fotografieren eines Subjekts erhaltenen Bewegtbilds auf einem Aufzeichnungsmedium (35), wobei das Verfahren folgendes aufweist:
Einstellen einer kontinuierlichen Fotografierzeitdauer zum kontinuierlichen Ausführen einer Bewegtbild-Fotografieroperation, wobei die Bewegtbild-Fotografieroperation gestoppt wird, wenn die kontinuierliche Fotografierzeitdauer ab dem Beginn der Bewegtbild-Fotografieroperation verstreicht;
Bestimmen, ob eine weitere Bewegtbild-Fotografieroperation innerhalb eines vorbestimmten Zeitintervalls begonnen wird oder nicht, seitdem die vorherige Bewegtbild-Fotografieroperation stoppt, wenn die kontinuierliche Fotografierzeitdauer verstrichen ist; und
Aufzeichnen eines von einem ersten Pausenbilds zur Unterbrechung und einem zweiten Pausenbild zum Beenden am Ende des durch die vorangehend gestoppte Bewegtbild-Fotografieroperation fotografierten Bewegtbilds aufzuzeichnen, wobei dann, wenn bestimmt wird, dass die weitere Fotografieroperation innerhalb des vorbestimmten Zeitintervalls begonnen ist, das erste Pausenbild zur Unterbrechung am Ende des Bewegtbilds aufgezeichnet wird, und dann, wenn bestimmt wird, dass die weitere Fotografieroperation nicht innerhalb des vorbestimmten Zeitintervalls begonnen ist, das zweite Pausenbild zum Beenden am Ende des Bewegtbilds aufgezeichnet wird.

7. Steuerverfahren nach Anspruch 6, wobei das erste Pausenbild zur Unterbrechung und das zweite Pausenbild zur Beendigung Standbilder aufweisen.

8. Steuerverfahren nach Anspruch 6, wobei das erste Pausenbild zur Unterbrechung und das zweite Pausenbild zur Beendigung Bewegtbilder aufweisen.

9. Steuerverfahren nach Anspruch 6 oder 8, wobei das erste Pausenbild zur Unterbrechung und das zweite Pausenbild zur Beendigung Auswahlbilder des durch die vorangehend gestoppte Bewegtbild-Fotografieroperation fotografierten Bewegtbilds aufweisen.

10. Steuerverfahren nach einem der Ansprüche 6 bis 9, wobei die kontinuierliche Fotografierzeitdauer basierend auf einer Eingabe durch einen Bediener vor einem Beginnen der Bewegtbild-Fotografieroperation eingestellt wird.

## Revendications

1. Appareil de photographie (1) pour enregistrer sur un support d'enregistrement (35) une image mobile obtenue en photographiant un sujet, l'appareil de photographie comprenant :
une unité de réglage de temps photographique (2) pour régler une période de temps photographique en continu afin de réaliser en continu une opération de photographie d'image mobile, ledit appareil arrêtant ladite opération de photographie d'image mobile lorsque ledit intervalle de temps photographique en continu s'écoule depuis le départ de ladite opération de photographie d'image mobile ;
une unité d'acquisition d'arrêt sur image (37) pour acquérir un premier arrêt sur image à titre d'intermède et un second arrêt sur image à titre de fin ;
une unité de détermination (40) pour déterminer si une autre opération de photographie d'image mobile est lancée ou non dans un intervalle de temps prédéterminé étant donné que l'opération de photographie d'image mobile précédente s'arrête lorsque ladite période de temps photographique en continu réglée par l'unité de réglage (2) s'est écoulée ; et
une unité d'enregistrement (40) pour enregistrer l'un du premier arrêt sur image à titre d'intermède et du second arrêt sur image à titre de fin à la fin de l'image mobile photographiée par ladite opération de photographie d'image mobile précédente arrêtée, où, si l'unité de détermination (40) a déterminé que ladite autre opération de photographie est lancée dans l'intervalle de temps prédéterminé, le premier arrêt sur image à titre d'intermède est enregistré à la fin de l'image mobile et, si l'unité de détermination (40) a déterminé que ladite autre opération de photographie n'est pas lancée dans l'intervalle de temps prédéterminé, le second arrêt sur image à titre de fin est enregistré à la fin de l'image mobile.

2. Appareil de photographie selon la revendication 1, dans lequel le premier arrêt sur image à titre d'intermède et le second arrêt sur image à titre de fin comprennent des images fixes.

3. Appareil de photographie selon la revendication 1, dans lequel le premier arrêt sur image à titre d'intermède et le second arrêt sur image à titre de fin comprennent des images mobiles.

4. Appareil de photographie selon la revendication 1 ou la revendication 3, dans lequel le premier arrêt sur image à titre d'intermède et le second arrêt sur image à titre de fin comprennent des images condensées de l'image mobile photographiée par ladite opération de photographie d'image mobile précédente arrêtée.

5. Appareil de photographie selon l'une quelconque des revendications 1 à 4, dans lequel la période de temps de photographie en continu est réglée sur la base d'une saisie par un opérateur avant de lancer l'opération de photographie d'image mobile.

6. Procédé de commande pour commander l'enregistrement d'une image mobile obtenue en photographiant un sujet sur un support d'enregistrement (35), le procédé comprenant les étapes consistant à :
régler une période de temps photographique en continu pour réaliser en continu une opération de photographie d'image mobile, ladite opération de photographie d'image mobile étant arrêtée lorsque ladite période de temps photographique en continu s'écoule depuis le départ de ladite opération de photographie d'image mobile ;
déterminer si une autre opération de photographie d'image mobile est lancée ou non dans un intervalle de temps prédéterminé étant donné que l'opération de photographie d'image mobile précédente s'arrête lorsque ladite période de temps photographique en continu s'est écoulée ; et
enregistrer l'un d'un premier arrêt sur image à titre d'intermède et d'un second arrêt sur image à titre de fin à la fin de l'image mobile photographiée par ladite opération de photographie d'image mobile précédente arrêtée, où, si l'on détermine que ladite autre opération de photographie est lancée dans l'intervalle de temps prédéterminé, le premier arrêt sur image à titre d'intermède est enregistré à la fin de l'image mobile et, si l'on détermine que ladite autre opération de photographie n'est pas lancée dans l'intervalle de temps prédéterminé, le second arrêt sur image à titre de fin est enregistré à la fin de l'image mobile.

7. Procédé de commande selon la revendication 6, dans lequel le premier arrêt sur image à titre d'intermède et le second arrêt sur image à titre de fin comprennent des images fixes.

8. Procédé de commande selon la revendication 6, dans lequel le premier arrêt sur image à titre d'intermède et le second arrêt sur image à titre de fin comprennent des images mobiles.

9. Procédé de commande selon la revendication 6 ou la revendication 8, dans lequel le premier arrêt sur image à titre d'intermède et le second arrêt sur image à titre de fin comprennent des images condensées de l'image mobile photographiée par ladite autre opération de photographie d'image mobile arrêtée.

10. Procédé de commande selon l'une quelconque des revendications 6 à 9, dans lequel la période de temps photographique en continu est réglée sur la base d'une saisie par un opérateur avec de lancer l'opération de photographie d'image mobile.
